# EUROPÄISCHE PATENTSCHRIFT

(11) **EP 2 698 678 B1**
(45) Veröffentlichungstag und Bekanntmachung des Hinweises auf die Patenterteilung: **01.06.2022**
(21) Anmeldenummer: 13004032.2
(22) Anmeldetag: 13.08.2013
(51) Int. Cl.: G05B 19/042, G06F 9/54

(54) **Konfigurationstechnik für ein Steuergerät mit miteinander kommunizierenden Anwendungen**
Configuration technique for a control device with applications that communicate with each other
Technique de configuration pour un appareil de commande avec des applications communiquant entre elles

(30) Priorität: 17.08.2012 DE 102012016539
(43) Veröffentlichungstag der Anmeldung: 19.02.2014
(73) Patentinhaber: Elektrobit Automotive GmbH, 91058 Erlangen (DE)
(72) Erfinder: Stellwag, Claus, 91459 Markt Erlbach (DE); Kerk, Daniel, 90403 Nürnberg (DE)
(74) Vertreter: Continental Corporation

(56) Entgegenhaltungen:
- US-A1- 2002 144 010
- US-A1- 2006 107 264
- "Partitioning in Avionics. Architectures: Requirements,. Mechanisms, and Assurance", INTERNET CITATION, 1. März 2000 (2000-03-01), Seiten I-62, XP002587030, Gefunden im Internet: URL:http://www.tc.faa.gov/its/worldpac/tec hrpt/ar99-58.pdf [gefunden am 2010-06-09]
- GHAISAS S ET AL: "SParK: Safety Partition Kernel for Integrated Real-Time Systems", 1. September 2010 (2010-09-01), FROM ACTIVE DATA MANAGEMENT TO EVENT-BASED SYSTEMS AND MORE, SPRINGER BERLIN HEIDELBERG, BERLIN, HEIDELBERG, PAGE(S) 159 - 174, XP019157475, ISBN: 978-3-642-17225-0 * das ganze Dokument *
- "An Avionics Standard for Safe, Partitioned Systems", ARINC 653 IEEE-CS SEMINAR,, 1. Januar 2008 (2008-01-01), Seite 30pp, XP009165105,
- ROBERT HILBRICH: "How to Safely Integrate Multiple Applications on Embedded Many-Core Systems by Applying the "Correctness by Construction" Principle", ADVANCES IN SOFTWARE ENGINEERING, Bd. 192, Nr. 3, 1. Januar 2012 (2012-01-01), Seiten 202-14, XP055169189, ISSN: 1687-8655, DOI: 10.1007/978-3-642-21292-5_4
- "Advances in Software Engineering - About this journal", , 23. Februar 2016 (2016-02-23), XP055252569, Gefunden im Internet: URL:http://www.hindawi.com/journals/ase/ [gefunden am 2016-02-23]

## Beschreibung

### Technisches Gebiet

Die vorliegende Offenbarung betrifft allgemein das technische Gebiet der Steuergeräte. Genauer gesagt wird eine Technik angegeben, um ein Steuergerät im Hinblick auf miteinander kommunizierende Steuergerät-Anwendungen zu konfigurieren. Die Technik kann in Form eines Verfahrens, eines Computerprogrammprodukts oder einer Vorrichtung implementiert werden.

### Hintergrund

Ein eingebettetes System (engl. "embedded system") bezeichnet eine Kombination aus einem Prozessor und darauf ausgeführter Software, die in einen technischen Anwendungskontext eingebunden sind. Dabei übernimmt der Prozessor beispielsweise Überwachungs-, Steuerungs- oder Regelungsfunktionen. In vielen Fällen ist der Prozessor zudem für die Signal- oder Datenaufbereitung zuständig. Moderne eingebettete Systeme können auch mehrere Prozessoren umfassen.

Als Beispiel für eingebettete Systeme können Steuergeräte (engl. "electronic control unit", ECU) genannt werden. Steuergeräte sind elektronische Module, die im Kraftfahrzeugbereich aber auch bei Maschinen und Anlagen für Steuerungs- und Regelungszwecke sowie für weitere Aufgaben verwendet werden.

In Kraftfahrzeugen werden Steuergeräte beispielsweise bei der elektronischen Motorsteuerung verwendet. Auch für Zwecke wie die Signalauswertung von Drehzahl-, Tankstand- oder Öldrucksensoren und die entsprechende Ansteuerung von Anzeigeinstrumenten kommen Steuergeräte zum Einsatz. Zudem werden Steuergeräte für automatische Systemeingriffe etwa zur Lenkunterstützung (engl. "automatic power steering", APS) oder im Zusammenhang mit einem Fahrstabilitätssystem (engl. "electronic stability program", ESP) verbaut. Zum gegenseitigen Informationsaustausch können Steuergeräte über einen Systembus miteinander vernetzt sein (z.B. gemäß dem CAN-, LIN-, MOST- oder FlexRay-Standard).

Mit dem Einzug elektronischer Komponenten in die Kraftfahrzeugtechnik hat die Anzahl der in einem Fahrzeug verbauten Steuergeräte in den letzten Jahren stark zugenommen. Dementsprechend ist auch der Aufwand für die Vernetzung der Steuergeräte gestiegen. Ähnliche Entwicklungen gab es auch im Maschinen- und Anlagenbau. Aus diesem Grund wurde darüber nachdacht, verschiedene Anwendungen in einem einzigen Steuergerät zu verdichten. Auf diese Weise lässt sich nicht nur die Anzahl der verbauten Steuergeräte reduzieren, sondern es können auch der Vernetzungsaufwand und die Kosten gesenkt werden. Andererseits entstehen neue Sicherheitsproblematiken.

So wurde erkannt, dass es zu Problemen kommen kann, wenn unterschiedliche, in einem einzigen Steuergerät integrierte Anwendungen auf denselben Speicherbereich zugreifen. Beispielsweise könnte der Zugriff einer Tachometeranwendung auf einen abgespeicherten Raddrehzahlwert mit dem Zugriff einer ESP-Anwendung auf diesen Wert kollidieren und diese Kollision dann zu einer sicherheitskritischen Situation führen. Aus diesem Grund wurden verschiedene Speicherschutzkonzepte (engl. "memory protection") für Steuergeräte mit mehreren Anwendungen vorgeschlagen.

Ein Speicherschutzkonzept kann über die Software eines Betriebssystems des Steuergeräts implementiert werden. Hierfür umfasst das Steuergerät häufig eine separate Hardware-Komponente in Gestalt einer Speicherschutzeinheit (engl. "memory management unit", MMU, oder auch "memory protection unit", MPU). Die Speicherschutzeinheit kann beispielsweise in einem Prozessor des Steuergeräts integriert sein oder aber eine vom Prozessor getrennte Komponente darstellen.

Der Speicherschutz dient üblicherweise der Umsetzung von Zugriffsrechten auf Speicherbereiche und ermöglicht dadurch die Abschottung von Anwendungsprozessen voneinander und vom Betriebssystem (darüber hinaus ist oft auch eine Unterstützung von virtuellen Adressen möglich). Insbesondere kann der Speicherschutz einzelne Speicherbereiche, auch Partitionen genannt, für ein Beschreiben (einschließlich eines konsumierenden Auslesens) selektiv sperren.

Die Schreibschutzfunktionalität wird in Steuergeräten, auf denen mehrere Anwendungen laufen, gezielt dazu eingesetzt, Anwendungen von niedrigerer Priorität das Manipulieren von Speicherbereichen zu verbieten, auf die auch von Anwendungen höherer Priorität zugegriffen wird (und ggf. umgekehrt). Für das Priorisieren von Anwendungen kann auf die IEC-Norm 61508 sowie die daraus abgeleitete ISO-Norm 26262 zugegriffen werden. In der IEC-Norm 61508 beispielsweise sind vier Sicherheitsanforderungsstufen (engl. "safety integrity level", SIL) definiert, nämlich SIL 1 bis SIL 4. Jede Stufe ist ein Maß für die notwendige bzw. erreichte risikomindernde Wirksamkeit einer mittels einer gegebenen Anwendung umgesetzten (sicherheitskritischen) Funktion.

In einer prioritätsbasierten Speicherschutz-Implementierung kann der physische Speicher eines Steuergeräts in verschiedene Partitionen unterteilt werden, wobei jeder Partition eine bestimmte Sicherheitsanforderungsstufe zugewiesen wird. Speicherzugriffe von Steuergerät-Anwendungen lassen sich dann derart steuern, dass in einem ersten Schritt die der zugreifenden Anwendung zugeordnete Sicherheitsanforderungsstufe bestimmt wird. Der Speicherzugriff (jedenfalls was Schreiboperationen anbelangt) wird dann auf die Partition mit der ermittelten Sicherheitsanforderungsstufe beschränkt.

Im Zusammenhang mit der Implementierung eines prioritätsbasierten Speicherschutz-Konzepts kann allgemein eine separate Partition für Anwendungen, denen keine Sicherheitsanforderungsstufe zugewiesen ist, vorgesehen werden. Ferner kann ein gemeinsam genutzter Speicher (engl. "shared memory") für die Kommunikation zwischen Anwendungen verschiedener Sicherheitsanforderungsstufen untereinander verwendet werden.

Techniken betreffend kommunizierende Anwendungen im Zusammenhang mit einer Speicherpartitionierung sind beschrieben in der US 2002/0144010 A1 und der US 2006/0107264 A1 sowie in Ghaisas et al.: "SParK: Safety Partition Kernel for Integrated Real Time Systems", From Active Data Management to Event-Based Systems and More, Berlin-Heidelberg, 2010, S. 159-174, und in "Partitioning in Avionics Architectures: Requirements, Mechanisms, and Assurance", veröffentlicht durch US Department of Transportation and NASA, 2000.

Um die Kommunikation von Steuergeräte-Anwendungen untereinander sowie den Austausch von Anwendungen auf verschiedenen Steuergeräten zu erleichtern, wurde die AUTOSAR-Entwicklungspartnerschaft ins Leben gerufen. Das AUTOSAR-Projekt ist eine Fortsetzung des OSEK-Standardisierungsgremiums.

Ein wesentlicher Aspekt der AUTOSAR-Spezifikation ist die logische Aufteilung der Software in steuergerätespezifische Basis-Software und steuergeräteunabhängige Anwendungs-Software. Ein virtueller Funktionsbus (engl. "virtual function bus", VFB) verbindet alle miteinander kommunizierenden Softwareanwendungen (engl. "software components", SWC), auch über verschiedene Steuergeräte hinweg. Kernstück der AUTOSAR-Architektur ist deren Laufzeitumgebung (engl. "run-time environment", RTE). Diese Laufzeitumgebung ist eine auf dem VFB basierende Kommunikationsschicht und verwendet Ports zum Sender-/Empfänger-orientierten Kommunizieren zwischen verschiedenen Anwendungen und zwischen einer Anwendung und dem Betriebssystem des Steuergeräts.

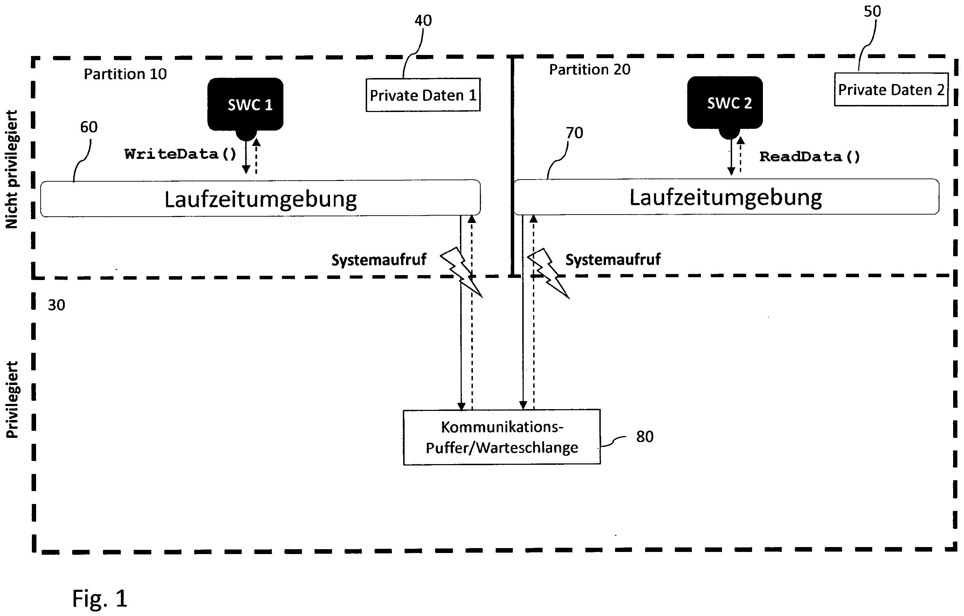

Fig. 1 zeigt schematisch die Speicherpartitionierung und speicherbasierte Kommunikation für ein Steuergerät im Zusammenhang mit der Implementierung eines prioritätsbasierten Speicherschutz-Konzepts im AUTOSAR-Umfeld. Im Beispielfall ist der Speicher in drei Partitionen aufgeteilt, nämlich zwei "nicht-privilegierte" Partitionen 10, 20 und eine "privilegierte" Partition 30.

Die beiden Partitionen 10, 20 umfassen jeweils den Softwarecode einer Anwendung SWC1 bzw. SWC2, wobei den beiden Anwendungen SWC1, SWC2 (bzw. den beiden Partitionen 10, 20) unterschiedliche Sicherheitsanforderungsstufen zugewiesen sind. Ferner umfasst jede der beiden Partitionen 10, 20 einen der jeweiligen Anwendung SWC1, SWC2 zugeordneten Bereich privater Daten 40, 50 sowie den Softwarecode einer der jeweiligen Anwendung zugeordneten Laufzeitumgebung 60, 70. Lese- und Schreiboperationen in Bezug auf die Bereiche privater Daten 40, 50 erfolgen in einem nicht-privilegierten Modus (auch Benutzer- oder User-Modus genannt) eines Prozessors, auf dem der Softwarecode der Anwendungen SWC1, SWC2 läuft. Auf dem in Fig. 1 nicht dargestellten Prozessor wird auch der Softwarecode der Laufzeitumgebungen 60, 70 und des Betriebssystems ausgeführt.

Die dritte Partition 30 umfasst einen gemeinsam genutzten Speicher 80 zur Kommunikation zwischen den beiden Anwendungen SWC1, SWC2. Der gemeinsam genutzte Speicher 80 ist als Puffer oder Warteschlange (engl. "queue") ausgebildet. Lese- und Schreiboperationen in Bezug auf den gemeinsam genutzten Speicher 80 sind nur in einem privilegierten Modus des Prozessors möglich.

Zur Kommunikation zwischen den beiden Anwendungen SWC1, SWC2 über den gemeinsam benutzten Speicher 80 ist ein Systemaufruf der jeweiligen Laufzeitumgebung 60, 70 über eine Programmierschnittstelle (engl. "application programming interface", API) zu dem in Fig. 1 nicht dargestellten Betriebssystem hin erforderlich. Das Betriebssystem ist u.a. dafür verantwortlich, eine Speicherschutzeinheit des Prozessors dynamisch gemäß dem Systemaufruf zu konfigurieren.

Wenn, wie in Fig. 1 veranschaulicht, beispielsweise die Anwendung SWC1 Daten aus dem Bereich privater Daten 40 in den gemeinsam benutzen Speicher 80 schreiben will, erfolgt in einem ersten Schritt eine Schreibanfrage an die Laufzeitumgebung 60. Die Laufzeitumgebung 60 macht daraufhin einen Systemaufruf zum Betriebssystem. Das Betriebssystem schreibt im privilegierten Modus die Daten aus dem Bereich privater Daten 40 in den Speicher 80. Von dort können die Daten dann von der Anwendung SWC2 ausgelesen werden.

Wenn in einem nächsten Schritt die Anwendung SWC2 die von der Anwendung SWC1 geschriebenen Daten beispielsweise in den Bereich privater Daten 50 lesen will, ist erneut in einem ersten Schritt eine Leseanfrage von der Anwendung SWC2 zur zugeordneten Laufzeitumgebung 70 hin erforderlich. Die Laufzeitumgebung 70 macht sodann einen Systemaufruf zum Betriebssystem. Das Betriebssystem prüft darauf hin, ob Daten im Speicher 80 vorhanden sind. Es liest die Daten dann - sofern vorhanden - im privilegierten Modus aus und liefert sie zurück, damit sie in den Bereich privater Daten 50 geschrieben werden können . Falls im Speicher 80 keine Daten vorhanden sein sollten, wird eine Fehlermeldung (in der Regel mit einem Fehlercode) zurückgegeben.

Die in Fig. 1 skizzierte Steuergerät-interne Kommunikation zwischen den Anwendungen SWC1, SWC2 auf der Grundlage des gemeinsam benutzten Speichers 80 ist aus verschiedenen Gesichtspunkten heraus unbefriedigend. Zum einen sind Systemaufrufe zum Betriebssystem und das damit verbundene Kopieren von Daten bzw. Konfigurieren der Speicherschutzeinheit aus der Perspektive des Prozessors rechenintensiv. Zum anderen sind für die Laufzeitumgebungen 60, 70 üblicherweise zusätzliche Wrapper-Funktionen erforderlich, welche den FLASH-Speicherbedarf erhöhen.

### Kurzer Abriss

Demgemäß ist eine Technik zur Konfiguration eines Steuergeräts mit miteinander kommunizierenden Anwendungen anzugeben, die eine oder mehrere der oben geschilderten Nachteile vermeidet.

Gemäß der Erfindung wird ein Verfahren zur Konfiguration eines Steuergeräts für miteinander kommunizierende Anwendungen gemäß Anspruch 1 angegeben. Dabei ist oder wird ein dem Steuergerät zugeordneter Speicher in Partitionen aufgeteilt und einer ersten Partition ist wenigstens eine Anwendung mit einer ersten Sicherheitsanforderungsstufe zugeordnet, einer zweiten Partition ist wenigstens eine Anwendung mit einer zweiten, von der ersten Sicherheitsanforderungsstufe verschiedenen Sicherheitsanforderungsstufe zugeordnet und einer dritten Partition ist wenigstens eine Anwendung mit einer dritten, von der ersten und zweiten Sicherheitsanforderungsstufe verschiedenen Sicherheitsanforderungsstufe oder mit keiner Sicherheitsanforderungsstufe zugeordnet. Das Verfahren umfasst die Schritte des Analysierens eines Kommunikationsverhaltens der den unterschiedlichen Partitionen zugeordneten Anwendungen untereinander, um wenigstens zwei Daten schreibende Anwendungen und eine die geschriebenen Daten lesende Anwendung zu identifizieren, die sich nicht alle in der gleichen Partition befinden, und des Konfigurierens eines gemeinsam benutzten Speicherbereichs im Speicher außerhalb der ersten, zweiten und dritten Partition sowie des Erzeugens einer Kommunikations-Datenstruktur für eine Kommunikation zwischen den Daten schreibenden Anwendungen und der Daten lesenden Anwendung, wobei die Kommunikations-Datenstruktur für die zumindest teilweise Anordnung in dem gemeinsam benutzten Speicherbereich vorgesehen wird.

Das Verfahren kann beispielsweise dann zum Einsatz gelangen, wenn mehreren schreibenden Anwendung eine lesende Anwendungen gegenüber steht. Dies entspricht allgemein einem Kommunikations-Verhältnis von n:1 (n=2, 3, ...) zwischen schreibenden und lesenden Anwendungen.

Wenigstens das Analysieren und das Konfigurieren kann offline durchgeführt werden, also im Vorfeld der Laufzeit der Anwendungen. Eine Speicherschutzeinheit des Schutzgeräts kann (z. B. während der Laufzeit) derart konfiguriert werden, dass die schreibenden Anwendungen während ihrer Laufzeit Schreibzugriff und die lesende Anwendung während ihrer Laufzeit nur Lesezugriff, aber keinen Schreibzugriff auf die Kommunikations-Datenstruktur erhalten.

Der gemeinsam benutzte Speicherbereich kann in einer vierten Partition angelegt werden.

Der gemeinsam benutzte Speicherbereich kann ein Bereich privater Daten sein. Die Kommunikations-Datenstruktur kann beispielsweise ein Pufferspeicher (z.B. ein Ringpuffer) und/oder eine Warteschlange sein. Beim Erzeugen der Kommunikations-Datenstruktur können/kann eine Größe und/oder eine Adresse der Datenstruktur festgelegt werden.

Im Rahmen des hier vorgestellten Verfahrens kann eine Laufzeitumgebung erzeugt werden (z.B. in Form von Quellcode oder Objektcode). Die Laufzeitumgebung kann dazu dienen, einen Funktionsaufruf einer Anwendung von einem Zugriff auf die Kommunikations-Datenstruktur zu entkoppeln. Mit anderen Worten kann die Laufzeitumgebung als Schnittstelle fungieren zwischen einer der Anwendungen und der Kommunikations-Datenstruktur, welche der Anwendung zugeordnet ist.

Das Verfahren kann ferner den Schritt des Empfangens von Informationen betreffend die Zuordnung zwischen Partitionen und Anwendungen sowie betreffend das Kommunikationsverhalten der Anwendungen umfassen. Der Schritt des Analysierens der Kommunikationswege kann in diesem Fall auf der Grundlage der empfangenen Informationen erfolgen. Die Informationen können beispielsweise in Gestalt einer Datei oder als Benutzereingabe empfangen werden.

Das Konfigurieren des gemeinsam benutzten Speicherbereichs und das Erzeugen der Kommunikations-Datenstruktur können allgemein im Zusammenhang mit dem Erstellen von kompilierbaren Konfigurationsdaten (z.B. in Gestalt von Quellcode) erfolgen. Die Konfigurationsdaten können partitionsspezifisch aufgeteilt sein (also z.B. mehrere Dateien oder Datensätze enthalten, die jeweils einer bestimmten Partition zugewiesen sind).

Neben den Konfigurationsdaten können auch Anwendungsdaten kompiliert werden, welche die Anwendungen (z.B. in Gestalt von Quellcode) enthalten. Die Anwendungsdaten können Aufrufe zu den zu lesenden und zu schreibenden Daten enthalten. Wie die Konfigurationsdaten können auch die Anwendungsdaten partitionsspezifisch aufgeteilt sein.

Die kompilierten Konfigurationsdaten können mit den kompilierten Anwendungsdaten verlinkt werden (z. B. in Gestalt von Objektcode). Das Verlinken kann auf der Grundlage von Informationen durchgeführt werden, die angeben, welche Anwendungsdaten auf welche Partitionen abzubilden sind.

Die Konfigurationsdaten allein oder die verlinkten Daten können (z.B. als Konfigurationsdatei) in das Steuergerät geladen werden. Das Steuergerät ist im Anschluss daran konfiguriert für die Kommunikation der Anwendungen untereinander.

Die Anwendungen können allgemein gemäß einer vorgegebenen Spezifikation miteinander kommunizieren. Diese Kommunikation kann beispielsweise auf der Grundlage der AUTOSAR-Spezifikation erfolgen.

Ferner bereitgestellt wird ein Computerprogrammprodukt mit Programmcodemitteln zur Durchführung der hier vorgestellten Verfahrensaspekte, wenn das Computerprogrammprodukt auf einem oder mehreren Prozessoren abläuft. Das Computerprogrammprodukt kann auf einem Speichermedium (beispielsweise einem FLASH-Speicher) abgespeichert sein. Das Speichermedium kann Teil eines Steuergeräts sein.

Gemäß einem weiteren Aspekt wird eine Vorrichtung zur Konfiguration eines Steuergeräts für miteinander kommunizierende Anwendungen gemäß Anspruch 8 bereitgestellt, wobei ein dem Steuergerät zugeordneter Speicher in Partitionen aufgeteilt ist oder wird und wobei einer ersten Partition wenigstens eine Anwendung mit einer ersten Sicherheitsanforderungsstufe zugeordnet ist, einer zweiten Partition wenigstens eine Anwendung mit einer zweiten, von der ersten Sicherheitsanforderungsstufe verschiedenen Sicherheitsanforderungsstufe zugeordnet ist und einer dritte Partition wenigstens eine Anwendung mit einer dritten, von der ersten und zweiten Sicherheitsanforderungsstufe verschiedenen Sicherheitsanforderungsstufe oder mit keiner Sicherheitsanforderungsstufe zugeordnet ist. Die Vorrichtung umfasst eine Analyse-Vorrichtung, die zum Analysieren eines Kommunikationsverhaltens der den unterschiedlichen Partitionen zugeordneten Anwendungen untereinander eingerichtet ist, um wenigstens zwei Daten schreibende Anwendungen und eine die geschriebenen Daten lesende Anwendung zu identifizieren, die sich nicht alle in der gleichen Partition befinden. Die Vorrichtung umfasst ferner eine Konfigurations-Einrichtung, die zum Konfigurieren eines gemeinsam benutzten Speicherbereichs im Speicher außerhalb der ersten, zweiten und dritten Partition und zum Erzeugen einer Kommunikations-Datenstruktur für eine Kommunikation zwischen den Daten schreibenden Anwendungen und der Daten lesenden Anwendung eingerichtet ist, wobei die Kommunikations-Datenstruktur für die zumindest teilweise Anordnung in dem gemeinsam benutzten Speicherbereich vorgesehen ist.

### Kurze Beschreibung der Zeichnungen

Weitere Aspekte, Vorteile und Einzelheiten der hier vorgeschlagenen Konfigurationstechnik für ein Steuergerät ergeben sich aus der nachfolgenden Beschreibung der Ausführungsbeispiele, die unter Bezugnahme auf die Figuren erläutert werden. Es zeigen:
- Fig. 1: eine speicherbasierte Kommunikation zwischen Anwendungen in einem herkömmlichen Steuergerät mit Speicherpartitionierung;
- Fig. 2: ein Blockdiagramm einer Konfigurationsvorrichtung gemäß einem Ausführungsbeispiel;
- Fig. 3: ein Blockdiagramm eines Steuergeräts gemäß einem Ausführungsbeispiel;
- Fig. 4: ein schematisches Diagramm zur Veranschaulichung der auf Sicherheitsanforderungsstufen basierenden Zuordnung zwischen Speicherpartitionen und Anwendungen bei dem Steuergerät gemäß Fig. 3;
- Fig. 5: ein Flussdiagramm, welches ein Ausführungsbeispiel eines Betriebsverfahrens für die Konfigurationsvorrichtung gemäß Fig. 2 und das Steuergerät gemäß Fig. 3 veranschaulicht;
- Fig. 6: ein schematisches Diagramm zur Veranschaulichung der Speicherkonfiguration und der speicherbasierten Kommunikation in einem Steuergerät gemäß einem ersten Beispiel, welches nicht Teil der beanspruchten
- Erfindung ist; Fig. 7: ein schematisches Diagramm zur Veranschaulichung der Speicherkonfiguration und der speicherbasierten Kommunikation in einem Steuergerät gemäß einem zweiten Beispiel, welches nicht Teil der
- beanspruchten: Erfindung ist; und
- Fig. 8: ein schematisches Diagramm zur Veranschaulichung der Speicherkonfiguration und der speicherbasierten Kommunikation in einem Steuerge rät gemäß einem dritten Ausführungsbeispiel; und
- Fig. 9: ein detaillierteres Diagramm zur Veranschaulichung eines Ausführungsbeispiels eines Betriebsverfahrens für die Konfigurationsvorrichtung gemäß Fig. 2

### Detaillierte Beschreibung

In der folgenden Beschreibung werden, zum Zweck der Erläuterung nicht aber der Beschränkung, verschiedene technische Details erläutert, um ein grundlegendes Verständnis der hier vorgestellten Technik zu gewährleisten. Es ist für den Fachmann ersichtlich, dass die vorliegende Technik in anderen Ausführungsbeispielen verwirklicht werden kann, die von den nachfolgend geschilderten Details abweichen. Beispielsweise werden die Ausführungsbeispiele in erster Linie im Kontext der C-Programmierung beschrieben; dies schließt jedoch nicht aus, andere programmtechnische Mittel einzusetzen.

Des Weiteren erschließt sich dem Fachmann, dass die nachstehend vorgestellten Dienste, Funktionen und Schritte unter Verwendung von Software-Code, der in Kombination mit einem Prozessor vorgesehen ist, oder unter Verwendung einer anwendungsspezifischen integrierten Schaltung (engl. "application specific integrated circuit", ASIC), eines digitalen Signalprozessors (DSP) oder eines Allzweckcomputers implementiert werden kann. Obwohl die nachstehenden Ausführungsbeispiele teilweise im Kontext von Verfahren und Vorrichtungen beschrieben werden, kann die hier vorgestellte Technik ebenso in einem Computerprogrammprodukt als Software-Code (z.B. als Quell- oder Objektcode) sowie in einem System verwirklicht werden, das einen Prozessor und einen an den Prozessor gekoppelten Speicher umfasst, der das Computerprogrammprodukt enthält.

Übereinstimmende Elemente sind in den folgenden Ausführungsbeispielen mit übereinstimmenden Bezugszeichen versehen.

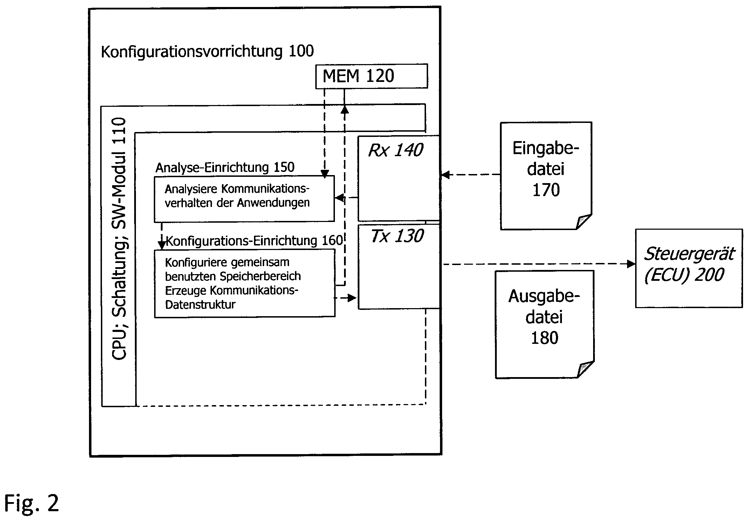

Fig. 2 zeigt ein Ausführungsbeispiel einer Konfigurationsvorrichtung 100 für ein Steuergerät 200. Es ist darauf hinzuweisen, dass die Vorrichtung 100 als herkömmlicher Computer (z.B. als Arbeitsplatzrechner) implementiert sein kann.

Die Vorrichtung 100 umfasst eine Kernfunktionalität 110, die als zumindest ein Prozessor (engl. "central processing unit", CPU), als dedizierte Schaltung (z.B. als ASIC) und/oder als Softwaremodul implementiert sein kann. Ferner umfasst die Vorrichtung 100 einen Speicher 120. Im Speicher 120 ist gemäß einer Implementierung ein Computerprogrammprodukt in Gestalt von Software-Code gespeichert, das von einer als Prozessor implementierten Kernfunktionalität 110 ausgeführt wird. Ein Sender 130 und ein Empfänger 140 dienen zur Kommunikation der Vorrichtung 100 mit einer anderen Vorrichtung oder mit einem Benutzer. Des Weiteren umfasst die Vorrichtung 100 eine Analyse-Einrichtung 150 und eine damit kommunizierende Konfigurations-Einrichtung 160.

Wie durch die gestrichelte Erweiterung der Kernfunktionalität 110 angedeutet ist, können die vorstehend genannten Einrichtungen 150, 160, die innerhalb der gestrichelten Linien dargestellt sind, sowohl als eigenständige Einrichtungen als auch als Unterfunktionalitäten der Kernfunktionalität 10 implementiert sein. Der Sender 130 und der Empfänger 140, die den gestrichelten Bereich überlappen, können durch die Kernfunktionalität 110 angesteuert werden bzw. können der Kernfunktionalität 110 Informationen bereitstellen.

Im Ausführungsbeispiel gemäß Fig. 2 ist der Empfänger 140 eingerichtet, um Daten (z.B. in Gestalt einer Eingabedatei 170) zu empfangen und der Analyse-Einrichtung 150 zur Verfügung zu stellen. In gleicher Weise ist der Sender 130 dazu eingerichtet, Konfigurationsdaten (z.B. in Gestalt einer Ausgabedatei 180) von der Konfigurations-Einrichtung 160 zu empfangen und auszugeben. Die Konfigurationsdaten können, wie in Fig. 2 veranschaulicht, mittelbar oder unmittelbar an das Steuergerät 200 ausgegeben werden.

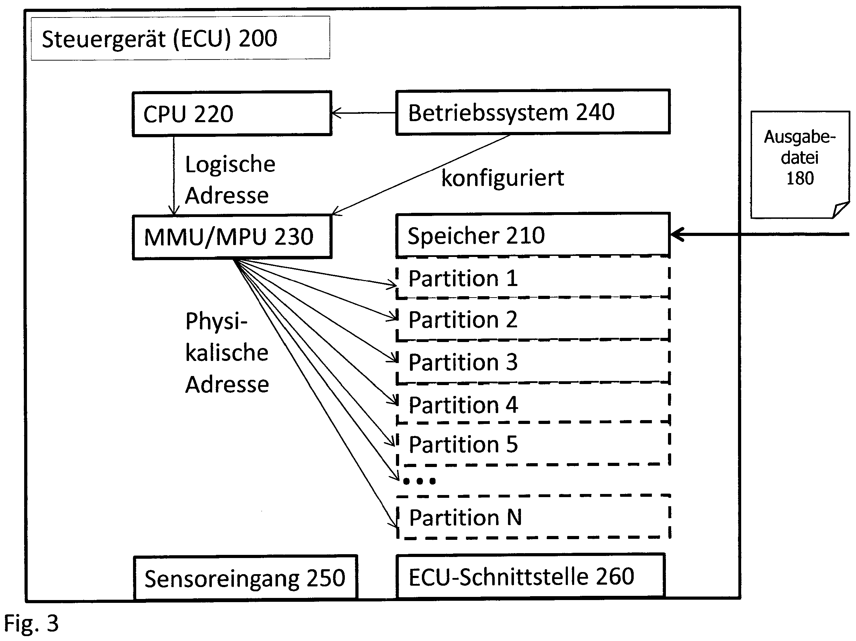

Fig. 3 veranschaulicht ein Ausführungsbeispiel des Steuergeräts 200 von Fig. 2. Wie in Fig. 3 gezeigt, können die von der Konfigurationsvorrichtung 100 erzeugten Konfigurationsdaten in einen Speicher 210 des Steuergeräts 200 geladen werden, um das Steuergerät 200 in geeigneter Weise zu konfigurieren. Der Speicher 210 kann auf unterschiedliche Art und Weise ausgeführt sein. Insbesondere kann der Speicher 210 in mehrere getrennte Hardware-Komponenten aufgeteilt sein. Im vorliegenden Ausführungsbeispiel umfasst der Speicher 210 wenigstens eine als FLASH-Speicher ausgebildete Hardware-Komponente.

Das in Fig. 3 gezeigte Steuergerät 200 umfasst neben dem Speicher 210 wenigstens einen Prozessor 220 sowie eine Speicherschutzeinrichtung 230. Die Speicherschutzeinrichtung 230 kann in den Prozessor 220 integriert sein oder eine hiervon getrennte Hardware-Komponente darstellen. Die Speicherschutzeinheit 230 ist als Schnittstelle zwischen dem Prozessor 220 und dem Speicher 210 angeordnet. Sie setzt auf logischen Adressen basierende Speicherzugriffe des Prozessors 220 in Speicherzugriffe um, die auf physikalischen Adressen basieren.

Die Speicherschutzeinheit 230 ist durch ein Betriebssystem 240 des Steuergeräts 200 konfigurierbar. Die Konfiguration der Speicherschutzeinheit 230 dient der Umsetzung eines Speicherschutzkonzepts im Hinblick auf den in mehrere Partitionen aufgeteilten Speicher 210. Die Speicherschutzeinheit 230 wird vom Betriebssystem 240 während der Laufzeit von Anwendungen konfiguriert, die im Speicher 210 abgespeichert sind.

Im vorliegenden Ausführungsbeispiel umfasst das Steuergerät 200 außerdem einen Sensoreingang 250. Über den Sensoreingang 250 können Sensorsignale von einem mehreren Sensoren empfangen werden. Sensorsignale können durch die Anwendungen verarbeitet werden, die im Speicher 210 abgespeichert sind.

In einer beispielhaften Implementierung kann das Steuergerät 200 ein Kraftfahrzeug-Steuergerät sein. In diesem Fall können über den Sensoreingang 250 beispielsweise Rad- oder Motordrehzahlsignale oder Temperatursignale zur weiteren Verarbeitung durch geeignete Anwendungen empfangen werden. Das Steuergerät 200 kann jedoch auch allgemein bei Maschinen oder Anlagen für Steuerungs- und Regelungszwecke zum Einsatz gelangen.

Ferner ist eine Schnittstelle 260 zu einem oder mehreren weiteren Steuergeräten (in Fig. 3 nicht dargestellt) vorgesehen. Die Steuergeräte können über einen Systembus miteinander vernetzt sein. Geeignete Bus-Spezifikationen wurden eingangs genannt.

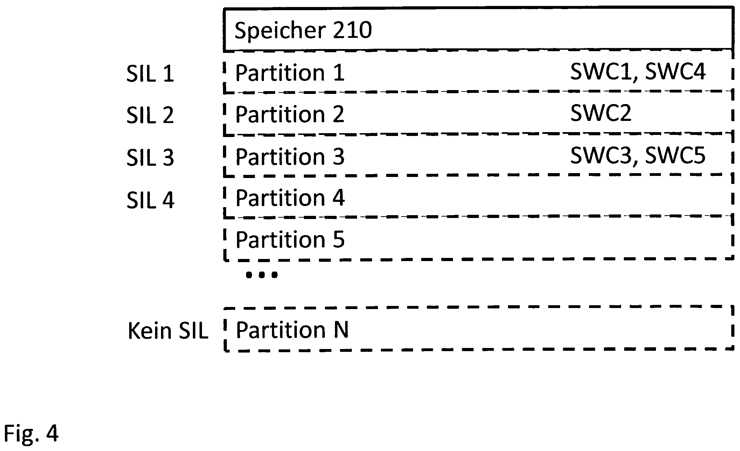

Zur Umsetzung des bereits erwähnten Speicherschutzkonzepts ist der Speicher 210, wie in den Fign. 3 und 4 gezeigt, in insgesamt N Partitionen unterteilt. So können beispielsweise bis zu 8, bis zu 16 oder bis zu 32 Partitionen vorgesehen werden. Die Speicherschutzeinheit 230 gewährleistet bei der Umsetzung des Speicherschutzkonzepts, dass einzelne auf dem Steuergerät 200 laufende Anwendungen jeweils nur Zugriff auf eine oder mehrere vorbestimmte Partitionen erhalten.

Zur Implementierung eines prioritätsbasierten Speicherschutzkonzepts sind, wie in Fig. 4 veranschaulicht, den einzelnen Partitionen einzelne Sicherheitsanforderungsstufen zugeordnet. Im vorliegenden Ausführungsbeispiel werden gemäß der IEC-Norm 61508 bzw. der ISO-Norm 26262 insgesamt vier Sicherheitsanforderungsstufen SIL1 bis SIL4 vergeben, wobei gemäß Fig. 4 der Partition n die Sicherheitsanforderungsstufe SILn (n=1, 2, 3, 4) zugeordnet ist. Ferner sind zwei oder mehr weitere Partitionen 5, N vorgesehen. Der Partition N ist dezidiert keine Sicherheitsanforderungsstufe zugeordnet.

An dieser Stelle ist darauf hinzuweisen, dass die oben genannten IEC- und ISO-Normen lediglich als Beispiele angegeben sind und die vorliegende Offenbarung auch im Zusammenhang mit anderweitigen Priorisierungskonzepten und damit verbundenen Sicherheitsanforderungsstufen umgesetzt werden kann.

Wie in Fig. 4 gezeigt, sind verschiedene Anwendungen SWC1 bis SWC5 gemäß der der jeweiligen Anwendung SWC1 bis SWC5 zugeordneten Sicherheitsanforderungsstufe auf die einzelnen Partitionen des Speichers 210 verteilt. So befinden sich die Anwendungen SWC1 und SWC4, denen jeweils die Sicherheitsanforderungsstufe SIL1 zugeordnet ist, in der Partition 1, während die Anwendung SWC2 mit der Sicherheitsanforderungsstufe SEL2 in der Partition 2 liegt und die Anwendungen SWC3 und SWC5 mit jeweils der Sicherheitsanforderungsstufe SIL 3 der Partition 3 zugeordnet sind. Wenn im vorliegenden Ausführungsbeispiel davon die Rede, dass eine Anwendung in einer bestimmten Partition angeordnet ist, so ist damit gemeint, dass der kompilierte Code dieser Anwendung zusammen mit dem kompilierten Code einer der Anwendung zugeordneten Laufzeitumgebung sowie die entsprechenden privaten Daten in der bestimmten Partition abgespeichert sind.

Im vorliegenden Ausführungsbeispiel ist keine Anwendung vorhanden, der die Sicherheitsanforderungsstufe 4 oder der keine Sicherheitsanforderungsstufe zugeordnet ist. Demgemäß sind die Partitionen 4 und N hier leer. Es ist darauf hinzuweisen, dass dediziert leere Partitionen im Speicher 210 (überhaupt) nicht konfiguriert werden müssen. Dies bedeutet, dass in manchen Ausführungsbeispielen die Partitionen 4, 5 und N im Speicher 210 entfallen können.

Die einzelnen Anwendungen können sowohl innerhalb einer Partition als auch über Partitionsgrenzen hinweg miteinander kommunizieren. Die Kommunikation zwischen den Anwendungen basiert im vorliegenden Ausführungsbeispiel auf der Grundlage der AUTOSAR-Spezifikation mit deren spezieller Laufzeitumgebung.

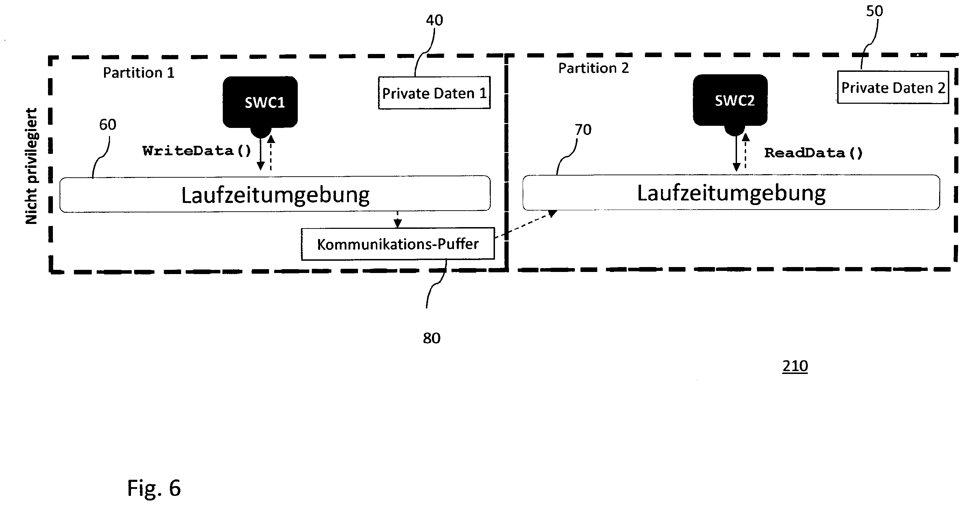

Die Kommunikation von Anwendungen, die sich nicht alle in der gleichen Partition befinden, erfolgt über einen gemeinsam benutzten Speicherbereich und eine in diesem Speicherbereich vorgesehene Kommunikations-Datenstruktur. Demgemäß können eine oder mehrere der in Fig. 4 veranschaulichten Partitionen ferner einen solchen gemeinsam benutzten Speicherbereich mit einer darin vorgesehenen Kommunikations-Datenstruktur enthalten. Der gemeinsam benutzte Speicherbereich kann in einer der Partitionen liegen, denen eine Sicherheitsanforderungsstufe SILn oder dediziert keine Sicherheitsanforderungsstufe zugeordnet ist, und/oder in einer separaten Partition (z.B. in Partition 5). Entsprechende Ausführungsbeispiele werden weiter unten unter Bezugnahme auf die Fign. 6 bis 8 erläutert.

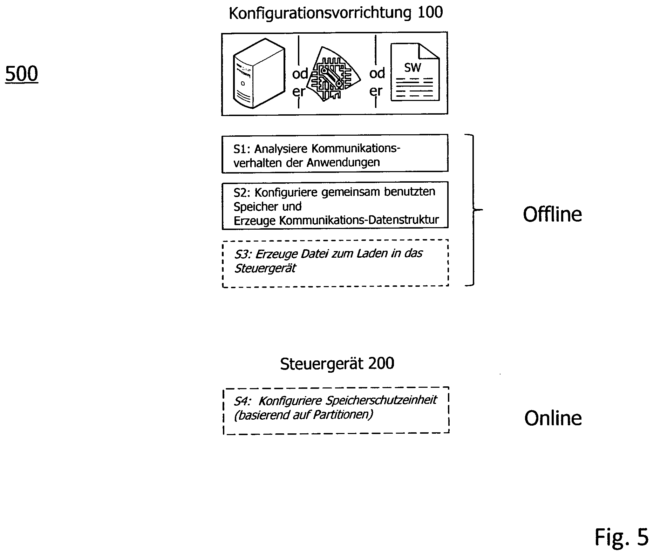

Im Folgenden wird anhand des Flussdiagramms 500 von Fig. 5 ein Ausführungsbeispiel eines Betriebsverfahrens für die Konfigurationsvorrichtung 100 gemäß Fig. 2 sowie das Steuergerät 200 gemäß Fig. 3 erläutert. Das Betriebsverfahren umfasst mehrere Schritte, die offline von der Konfigurationsvorrichtung 100 durchgeführt werden, sowie einen oder mehrere Schritte, die online von dem Steuergerät 200 durchgeführt werden. Die online durchgeführten Schritte werden während der Laufzeit einer oder mehrerer der Anwendungen SWC1 bis SWC5 im Steuergerät 200

durchgeführt, während die offline durchgeführten Schritte im Vorfeld der online durchgeführten Schritte in der Konfigurationsvorrichtung 100 ablaufen.
Die offline durchgeführten Schritte dienen dazu, Konfigurationsdaten zu erzeugen, die das Steuergerät 200 für die miteinander kommunizierenden Anwendungen SWC1 bis SWC5 konfigurieren. Wie bereits oben unter Bezugnahme auf Fig. 4 erläutert, sind den miteinander kommunizierenden Anwendungen SWC1 bis SWC5 unterschiedliche Sicherheitsanforderungsstufen zugeordnet. Die Anwendungen SWC1 bis SWC5 sind gemäß der jeweils zugeordneten Sicherheitsanforderungsstufe im Ausführungsbeispiel auf die Partitionen 1, 2 und 3 verteilt.

In einem ersten Schritt S1, der von der Analyse-Einrichtung 150 gemäß Fig. 2 durchgeführt wird, analysiert die Konfigurationsvorrichtung 100 das Kommunikationsverhalten der den unterschiedlichen Partitionen 1, 2 und 3 zugeordneten Anwendungen SWC1 bis SWC5 untereinander. Die Analyse wird auf der Grundlage von Kommunikationsdaten durchgeführt, die (z.B. in Gestalt der Eingabedatei 170) über den Empfänger 140 empfangen wurden.

Gemäß einer ersten Implementierung des Schritts S1, welche jedoch nicht Teil der beanspruchten Erfindung ist, werden im Rahmen der Analyse eine schreibende Anwendung und wenigstens eine die geschriebene Daten lesende Anwendung identifiziert, die sich nicht in der gleichen Partition befinden. Allgemein kann sich ein Kommunikations-Verhältnis von 1:n (n=1, 2, ...) zwischen schreibenden und lesenden Anwendungen ergeben.

Gemäß einer zweiten Implementierung des Schritts S1 gemäß der vorliegenden Erfindung ergibt die Analyse wenigstens zwei Daten schreibende Anwendungen und eine die geschriebenen Daten lesende Anwendung, die sich nicht alle in der gleichen Partition befinden. Gemäß dieser Implementierung besteht ein Kommunikations-Verhältnis von n:1 (n=2, 3, ...) zwischen schreibenden und lesenden Anwendungen.

Es ist darauf hinzuweisen, dass im Rahmen der Analyse in Schritt S1 auch mehrere Verhältnisse von 1:n sowie zusätzlich oder alternativ hierzu mehrere Verhältnisse von n:1 im Zusammenhang mit unterschiedlichen Anwendungen identifiziert werden können. Mit anderen Worten können Sätze von Anwendung identifiziert werden, die in einem Verhältnis von 1:n zwischen schreibenden und lesenden Anwendungen stehen, sowie weitere Sätze von Anwendungen, die in einem Verhältnis von n:1 zwischen schreibenden und lesenden Anwendungen stehen. Gemäß der Erfindung wird, wie bereits erläutert, mindestens ein Verhältnis von n:1 zwischen schreibenden und lesenden Anwendung identifiziert.

Auf der Grundlage des Ergebnisses der Analyse in Schritt S1 wird in Schritt S2 die Konfigurations-Einrichtung 160 tätig, um Konfigurationsdaten zu erzeugen. Hierbei wird für jeden Satz von Anwendungen, für die ein Verhältnis von 1:n oder n:1 zwischen schreibenden und lesenden Anwendungen ermittelt wurde, ein gemeinsam benutzter Speicherbereich konfiguriert und eine Kommunikations-Datenstruktur für die (zumindest teilweise) Anordnung in dem gemeinsam benutzten Speicherbereich erzeugt.

In dem nicht beanspruchten Beispiel betreffend ein Verhältnis von 1:n zwischen schreibenden und lesenden Anwendungen wird der gemeinsam benutzte Speicherbereich in der Partition der schreibenden Anwendung konfiguriert. Erfindungsgemäß wird bei einem Verhältnis von n:1 der gemeinsam benutzte Speicherbereich im Speicher 210 außerhalb der Partitionen der beteiligten Anwendungen konfiguriert. Hierzu nun ein Beispiel auf der Grundlage von Fig. 4. Bei zwei schreibenden Anwendungen SWC1 und SWC2 in der Partition 1 bzw. Partition 2 und einer lesenden Anwendung SWC3 in der Partition 3 wird der gemeinsam benutzte Speicherbereich in diesem Fall im Speicher außerhalb der Partitionen 1, 2 und 3 konfiguriert. Beispielsweise kann der gemeinsam benutzte Speicherbereich in der Partition 5 konfiguriert werden, die nicht einer der Sicherheitsanforderungsstufen SILn zugeordnet ist und der auch nicht dediziert keine Sicherheitsanforderungsstufe zugeordnet ist.

Die in Schritt S2 erzeugten Konfigurationsdaten (einschließlich der Kommunikations-Datenstruktur) definieren beispielsweise die Anzahl der im Speicher 210 des Steuergeräts 200 anzulegenden Partitionen, die Start- und Endadressen der Partitionen im Speicher 210, eine Größe der Kommunikations-Datenstruktur sowie eine Speicheradresse der Kommunikations-Datenstruktur im Speicher 210. Die entsprechenden Konfigurationsdaten können in einem optionalen Schritt S3 zu einer Datei zusammengefasst werden, um in das Steuergerät 200 geladen zu werden.

Die Konfigurationsdaten können ferner optional mit Anwendungsdaten der zugehörigen Anwendungen SWC1 bis SWC5 verlinkt werden. Dieses Verlinken kann beispielsweise derart geschehen, dass die einer bestimmten Partition zugeordneten Konfigurationsdaten mit der dieser Partition zugeordneten Anwendungsdaten verlinkt werden. Es wäre jedoch auch denkbar, die Konfigurationsdaten und die Anwendungsdaten getrennt voneinander auf das Steuergerät 200 zu laden.

Nachdem die Konfigurationsdaten und Anwendungsdaten auf das Steuergerät 200 geladen wurden, ist das Steuergerät 200 in geeigneter Weise für eine Kommunikation unter den Anwendungen SWC1 bis SWC5 konfiguriert. Diese auf einer oder mehreren der vorstehend genannten Kommunikations-Datenstrukturen basierende Kommunikation zwischen den Anwendungen erfordert keinen Systemaufruf zum Betriebsystem 240 hin. Gleichzeitig gewährleistet die Speicherschutzeinheit 230, dass im Fall eines Kommunikations-Verhältnisses von 1:n die lesende Anwendung während ihrer Laufzeit nur Lesezugriff, aber keinen Schreibzugriff auf die entsprechende Kommunikations-Datenstruktur erhält. Im Fall eines Kommunikations-Verhältnisses von n:1 wird andererseits gewährleistet, dass die schreibenden Anwendungen während ihrer Laufzeit Schreibzugriff und die lesende Anwendung während ihrer Laufzeit nur Lesezugriff, aber keinen Schreibzugriff auf die entsprechende Kommunikations-Datenstruktur erhalten. Die entsprechende Konfiguration der Speicherschutzeinheit 230 zur Umsetzung dieser Speicherschutzkonzepte erfolgt online, also während der Laufzeit der Anwendungen SWC1 bis SWC5, mittels des Betriebssystems 240 (vgl. Schritt S4 in Fig. 5).

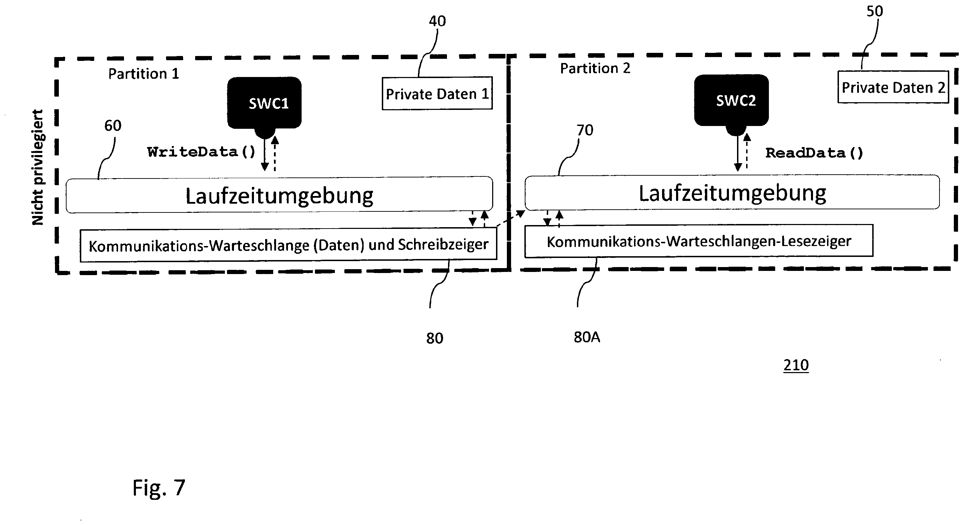

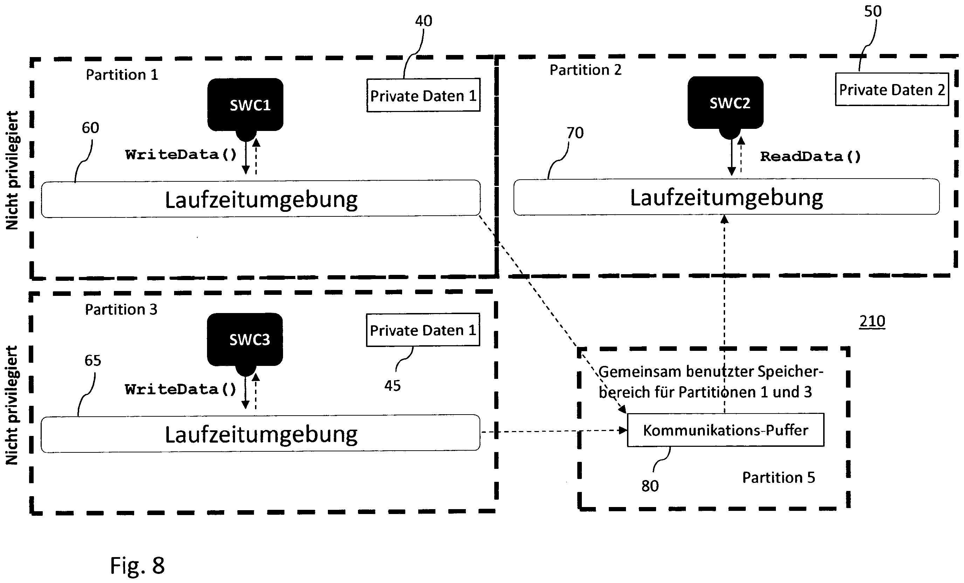

In den Fign. 6 bis 8 sind einige Ausführungsbeispiele für die Konfiguration der verschiedenen Partitionen des Steuergeräts-Speichers 210 sowohl für das nicht beanspruchte Kommunikations-Verhältnis von 1:n (Fign. 6 und 7) als auch für das erfindungsgemäße Kommunikations-Verhältnis n:1 (Fig. 8) dargestellt. Die Beispiele veranschaulichen die Kommunikation von Anwendungen, die in unterschiedlichen Partitionen angeordnet sind, auf der Grundlage von Kommunikations-Datenstrukturen und ohne die Notwendigkeit von Systemausrufen zum Betriebssystem 240 hin. Die Konfiguration des Speichers 210 gemäß den Fign. 6 bis 8 ist das Ergebnis des Ladens der Konfigurationsdaten und der Anwendungsdaten in das Steuergerät 200.

Fig. 6 betrifft den Fall einer (einzigen) Daten schreibenden Anwendung SWC1 sowie einer (einzigen) die von der Anwendung SWC1 geschriebenen Daten lesenden Anwendung SWC2. Wie bereits unter Bezugnahme auf Fig. 4 erläutert, ist der Anwendung SWC1 die Sicherheitsanforderungsstufe SIL1 zugeordnet, während die Anwendung SWC2 die Sicherheitsanforderungsstufe SIL2 besitzt. Demgemäß sind die beiden Anwendungen SWC1 und SWC2 in getrennten Partitionen (Partition 1 und Partition 2) angeordnet, mit separaten Laufzeitumgebungen 60, 70 und getrennten privaten Daten 40, 50.

Erkennt die Analyse-Einrichtung 150 der Konfigurationseinrichtung 100 ein solches Kommunikationsverhalten und eine solche Partitionsaufteilung der beiden Anwendungen SWC1 und SWC2, wird, wie in Fig. 6 gezeigt, ein gemeinsam benutzter Speicherbereich in der Partition 1 der schreibenden Anwendung SWC1 konfiguriert und eine Kommunikations-Datenstruktur 80 erzeugt, die in diesem gemeinsam benutzten Speicherbereich vorgesehen ist. Im vorliegende Ausführungsbeispiel ist die Kommunikations-Datenstruktur als Kommunikations-Pufferspeicher ausgebildet. Der Kommunikations-Pufferspeicher 80 ist ein Bereich privater Daten aus der Perspektive der Partition 1.

Beispielsweise kann die Anwendung SWC1 das Signal eines Raddrehzahlsensors aufbereiten und als Geschwindigkeitswert (über einen Aufruf der zugeordneten Laufzeitumgebung 60) in den Kommunikations-Pufferspeicher 80 schreiben. Der Geschwindigkeitswert im Kommunikations-Pufferspeicher 80 kann von der Anwendung SWC1 fortlaufend aktualisiert werden (also gemäß einer "Last-Is-Best"-Semantik). Die Anwendung SWC2 kann eine Anwendung sein, welche eine Fahrerwarnung ausgibt, wenn der aktuelle Geschwindigkeitswert einen Grenzwert überschreitet. Zu diesem Zweck kann die Anwendung SWC2 (über einen Aufruf der zugeordneten Laufzeitumgebung 70) den von der Anwendung SWC1 in den Kommunikations-Pufferspeicher 80 geschriebenen Geschwindigkeitswert auslesen. Die Speicherschutzeinheit 230 des Steuergeräts 200 ist dabei derart konfiguriert, dass die lesende Anwendung SWC2 während ihrer Laufzeit nur Lesezugriff, aber keinen Schreibzugriff auf den Kommunikations-Pufferspeicher 80 besitzt.

Fig. 7 veranschaulicht ein ähnliches Szenario wie Fig. 6, allerdings für den Fall eines konsumierenden Auslesens des Kommunikations-Pufferspeichers 80 seitens der Anwendung SWC2. Dies bedeutet, dass der jeweils zuletzt ausgelesene Wert im Kommunikations-Pufferspeicher 80 gelöscht oder ungültig wird. Zu diesem Zweck ist der Kommunikations-Pufferspeicher 80 im Ausführungsbeispiel gemäß Fig. 7 als Warteschlange (z.B. als Ringpuffer) konfiguriert.

Die schreibende Anwendung SWC1 führt in der Kommunikations-Warteschlange in herkömmlicher Weise einen Schreibzeiger mit. In komplementärer Weise hat die lesende Anwendung SWC2 einen Lesezeiger mitzuführen. Aufgrund des im vorliegenden Ausführungsbeispiel implementierten Speicherschutzkonzepts besitzt die Anwendung SWC2 keinen Schreibzugriff auf die in der Partition 1 der schreibenden Anwendung SWC1 konfigurierte Kommunikations-Warteschlange (als erster Teil der Kommunikations-Datenstruktur), um ihren Lesezeiger dort abzuspeichern. Daher wird der Lesezeiger in einem privaten Speicherbereich 80A (als zweiter Teil der Kommunikations-Datenstruktur) im privaten Datenbereich der Partition 2 mitgeführt.

Bei zwei oder mehr lesenden Anwendungen kann für jede Anwendung eine separate Kommunikations-Warteschlange im Bereich der Partition 1 eingerichtet werden. Ferner kann in jeder Partition einer lesenden Anwendung ein separater Bereich privater Daten 80A für das Mitführen des jeweiligen Lesezeigers eingerichtet werden (in Fig. 7 nicht dargestellt).

Fig. 8 zeigt eine Konfiguration des Steuergeräts-Speichers 210 für den Fall zweier schreibender Anwendungen SWC1 und SWC3 sowie einer lesenden Anwendung SWC2. Den Anwendungen SWC1, SWC2, SWC3 ist jeweils eine Laufzeitumgebung 60, 70, 65, sowie ein Bereich privater Daten 70, 54, 50 innerhalb der jeweiligen Partition zugeordnet.

In dem in Fig. 8 veranschaulichten Fall ergibt die seitens der Analyse-Einrichtung 150 durchgeführte Analyse, dass den zwei schreibenden Anwendungen SWC1 und SWC3 eine (einzige) die geschriebenen Daten lesende Anwendung SWC2 gegenübersteht, die sich nicht alle in der gleichen Partition befinden (und folglich unterschiedliche Sicherheitsanforderungsstufen besitzen; vgl. Fig. 4). Aus diesem Grund wird von der Konfigurations-Einrichtung 160 ein gemeinsam benutzter Speicherbereich im Speicher außerhalb der Partitionen 1, 2 und 3 konfiguriert. Im vorliegenden Ausführungsbeispiel erfolgt hier eine entsprechende Konfiguration der Partition 5. Ferner wird wieder eine Konfigurations-Datenstruktur in Gestalt eines Kommunikations-Pufferspeichers 80 in der als gemeinsam benutzter Speicherbereich fungierenden Partition 5 vorgesehen. Das Betriebssystem 240 konfiguriert die Speicherschutzeinrichtung 230 dann derart, dass die schreibenden Anwendungen SWC1 und SWC3 während ihrer Laufzeit Schreibzugriff und die lesende Anwendung SWC2 während ihrer Laufzeit nur Lesezugriff, aber keine Schreibzugriff auf den Kommunikations-Pufferspeicher 80 besitzt.

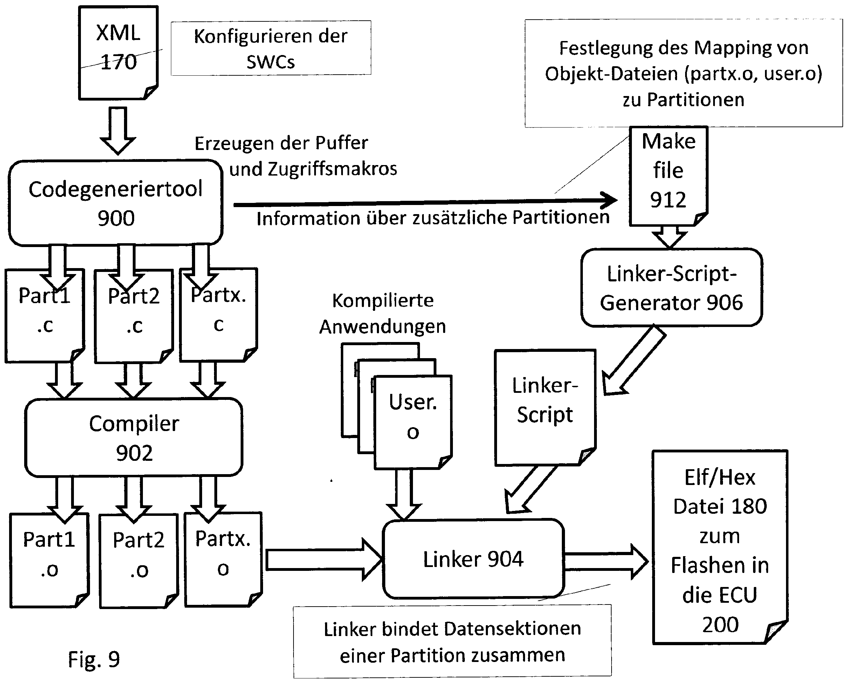

Nachfolgend wird unter Bezugnahmen auf Fig. 9 ein detaillierteres Ausführungsbeispiel eines Betriebsverfahrens für die Konfigurationsvorrichtung 100 erläutert. Das Betriebsverfahren kann im Zusammenhang mit den Schritten S1 bis S3 gemäß Fig. 5 durchgeführt werden und wird im Folgenden beispielhaft anhand der Speicherkonfiguration gemäß Fig. 8 beschrieben.

Fig. 9 zeigt die Software-Komponenten der Konfigurationseinrichtung 100, welche im Zusammenspiel die Durchführung der Schritte S1 bis S3 bewirken. Diese Software-Komponenten können beispielsweise im Speicher 120 der Konfigurationsvorrichtung (vgl. Fig. 2) in Gestalt von Software-Code abgespeichert sein.

Wie in Fig. 9 dargestellt, umfassen die Software-Komponenten ein Code-Generiertool 900 zur Erstellung von Quellcode (hier C-Code), einen Compiler 902 zur Erzeugung von Objektcode aus dem vom Code-Generiertool 900 erzeugten Quellcode sowie einen Linker 904. Der Linker 904 wird auf der Basis eines Linker-Scripts betrieben, welches von einem Linker-Script-Generator 906 erzeugt wurde. Der Linker 904 ist dazu eingerichtet, basierend auf dem Linker-Script den vom Compiler 902 erzeugten Objektcode mit weiterem Objektcode, der den kompilierten Anwendungen entspricht, zu verlinken.

Im Bild von Fig. 2 übernimmt das Code-Generiertool 900 die Aufgabe der Analyse-Einrichtung 150 und zumindest teilweise die Aufgabe der Konfigurations-Einrichtung 160. Dies entspricht den Schritten S1 und S2 in Fig. 5. Der Compiler 902 und der Linker 904 wiederum führen zumindest teilweise die Prozesse des Schritts S3 in Fig. 5 aus.

Wie in Fig. 9 gezeigt, empfängt das Code-Generiertool 900 (über den Empfänger 140 gemäß Fig. 2) eine Eingabedatei 170, beispielsweise im Extended Marked-Up Language (XML)-Format. Vom Linker 904 ausgegeben wird eine Ausgabedatei 180 zum Flashen in den Steuergerät-Speicher 210. Die Ausgabedatei 180 kann ein Hexadezimal-Format oder ein ELF-Format (Executable And Linking Format) aufweisen. Im Folgenden werden die Verarbeitungsschritte in der Konfigurationseinrichtung 100, um von der Eingabedatei 170 zur Ausgabedatei 180 zu gelangen, unter Bezugnahme auf die beispielhafte Speicherkonfiguration gemäß Fig. 8 und anhand von Pseudo-Code-Beispielen näher erläutert.

Die Eingabedatei 170 enthält Informationen hinsichtlich der Zuordnung zwischen Partitionen und Anwendungen einerseits sowie hinsichtlich des Kommunikationsverhaltens der Anwendungen untereinander andererseits. Im vorliegenden Beispiel (vgl. Fig. 8) liest die Anwendung SWC2 Daten ein, die entweder von der Anwendung SWC1 oder von der Anwendung SWC3 kommen können. Die Anwendungen SWC1 und SWC3 erzeugen folglich die Daten, während die Anwendung SWC3 als Konsument der Daten fungiert. Die Daten sollen im vorliegenden Beispiel eine "Last-Is-Best"-Semantik haben.

Es kann sich bei den Daten beispielsweise um die Innentemperatur TEMP eines Kraftfahrzeugs handeln, die von einer Klimaanlagen-Anwendung SWC2 gelesen wird und von zwei unterschiedlichen Anwendungen SWC1 und SWC2 (z.B. in redundanter Weise) auf der Grundlage von Temperatursensorsignalen erzeugt wird. In einer Pseudo-Code-Darstellung kann die Eingabedatei 170 demgemäß das folgende Format aufweisen:

```
 <ECU>
      <SWC>
             <SWC-NAME>SWC1</SWC-NAME>
             <OWNPARTITION name="Part1" />
      </SWC>
      <SWC>
             <SWC-NAME>SWC2</SWC-NAME>
             <OWNPARTITION name="Part2" />
      </SWC>
      <SWC>
             <SWC-NAME>SWC3</SWC-NAME>
             <OWNPARTITION name="Part3" />
      </SWC>
      <SIGNAL>
             <NAME>TEMP</NAME>
             <SENDER>SWC1,SWC3</SENDER>
             <RECEIVER>SWC2</RECEIVER>
      </SIGNAL>
      </ECU>
```

Das Code-Generiertool 900 liest die Eingabedatei 170 ein und analysiert auf der Grundlage der in der Eingabedatei 170 enthaltenen Kommunikationsdaten (einschließlich der Partitionszuteilungen) das Kommunikationsverhalten der den unterschiedlichen Partitionen 1, 2 und 3 zugeordneten Anwendungen SWC1, SWC2 und SWC3. In diesem Zusammenhang stellt das Code-Generiertool 900 fest, dass den beiden Daten schreibenden Anwendung SWC1 und SWC3 eine einzige Daten lesende Anwendung SWC2 gegenübersteht, wobei sämtliche Anwendungen SWC1, SWC2 und SWC3 in unterschiedlichen Partitionen liegen.

Damit die Kommunikation unter den Anwendungen SWC1, SWC2 und SWC3 keine Systemaufrufe zum Betriebsystem 240 hin umfasst und gleichzeitig das bereits oben geschilderte Speicherschutzkonzept implementiert werden kann, ist, wie in Fig. 8 gezeigt, eine separate Partition 5 im Steuergerät-Speicher 210 anzulegen. Da im vorliegenden Ausführungsbeispiel der vom Code-Generiertool 900 ausgegebene C-Code in partitionsspezifische Dateien geschrieben wird ("Partx.c" in Fig. 9), legt das Code-Generiertool 900 neben jeweils einer eigenen Datei für die Partitionen 1, 2 und 3 (mit einer Laufzeitumgebung für die jeweilige Anwendung SWC1, SWC2 oder SWC3) eine weitere Datei mit den Daten für die Kommunikations-Datenstruktur 80 in Partition 5 an. Die entsprechende Datei für die Partition 5, beispielsweise mit dem Dateinamen TEMP.c, könnte wie folgt aussehen:

```
 TEMPType BufferTEMP;
```

Ferner erzeugt das Code-Generiertool 900 Macros, um über den Daten-Namen TEMP auf die Innentemperaturdaten zugreifen zu können. Diese Macros könnten dann wie folgt aussehen:

```
 #define SendTEMP(x) BufferTEMP =x
 #define ReceiveTEMP() BufferTEMP
```

In einem nächsten Schritt übersetzt der Compiler 902 die vom Code-Generiertool 900 partitionsspezifisch erzeugten Quellcode-Dateien in entsprechende Objektcode-Dateien ("Partx.o" in Fig. 9). Neben den vom Code-Generiertool 900 erzeugten Dateien übersetzt der Compiler 902 auch Anwendungsdateien, welche auf dem Steuergerät 200 die eigentlichen Funktionen der Anwendungen SWC1, SWC2 und SWC3 implementieren ("User.o" in Fig. 9). Diese Anwendungsdateien enthalten Aufrufe für die Daten von TEMP, also beispielsweise SendTEMP(x) oder ReceiveTEMP(x).

Wie in Fig. 9 gezeigt, erzeugt das Code-Generiertool 900 neben den Quellcode-Dateien auch noch Informationen, wie viele neue Partitionen angelegt wurden (hier: eine Partition, nämlich die Partition 5) und welche Quellcode-Dateien in welche Partition abzubilden sind. Diese Informationen können als unmittelbar verarbeitbare Informationen (z.B. als Makefile-Fragment 912) ausgegeben werden, um vom Linker-Script-Generator 906 verarbeitet zu werden. Konkret werden im Makefile-Fragment 912 Variablen gesetzt, welche der Linker-Script-Generator 906 nutzt, um ein gültiges Linker-Script zu erzeugen. Das Makefile-Fragment kann für den in Fig. 8 illustrierten Beispielfall wie folgt aussehen:

```
      OBJS_Part1= SWC1.o ...
      OBJS_PartlRWRegion= TEMP.o
      OBJS_Part2= SWC2.o ...
      OBJS_Part3= SWC3.o ...
      OBJS_Part3RWRegion= TEMP.o
      OBJS_Part4= TEMP.o
```

Der Linker-Script-Generator wird anschließend gestartet, und es wird ihm eine Liste der Variablen (OBJS_xxx) übergeben. Das von Linker-Script-Generator 906 erzeugte Linker-Script fasst die jeweiligen Objekte einer Partition (aus OBJS_Part<Nr>) in eine zusammenhängende Sektion zusammen. Darüber hinaus werden Sektionsadressen erzeugt (aus OBJS_Part<Nr>RWRegion) und als Linker-Symbole abgelegt. Diese Linker-Symbole können vom Betriebssystem 240 später referenziert werden, wenn dieses die Speicherschutzeinheit 230 während eines Task- bzw. Threadwechsels umkonfiguriert.

Anschließend werden sämtliche Objektdateien durch den Linker 904 auf der Grundlage des Linker-Scripts zusammengebunden. Durch das Linker-Script wird festgelegt, wohin die einzelnen Sektionen eines Objekts (Anwendungs-Code, AnwendungsDaten, Laufzeitumgebungs-Code, usw.) lokatiert werden. Die daraus resultierende absolute Datei kann im Anschluss daran in das Steuergerät 200 geladen und gestartet werden, um das in Fig. 8 veranschaulichte Kommunikationsverhalten zwischen den Anwendungen SWC1, SWC2 und SWC3 zu bewirken.

Wie sich aus der Beschreibung der Ausführungsbeispiele (vgl. z.B. Fign. 6 bis 8) ergibt, kann ein "System-Trap" vermieden, da zur Kommunikation zwischen den Anwendungen kein Systemaufruf mehr notwendig ist. Vielmehr kommunizieren die Anwendungen unter Verwendung einer Kommunikations-Datenstruktur. Wie oben geschildert, kann diese Datenstruktur in einem Bereich privater Daten vorgesehen sein, und zwar entweder in einer Partition der schreibenden Anwendung (Fall 1:n) oder einer dedizierten Partition (Fall n:1).

Insgesamt kann der mit der Kommunikation zwischen den Anwendungen verbundene Rechenaufwand aus der Perspektive eines Steuergerät-Prozessors (im Vergleich zu dem in Fig. 1 gezeigten Szenario mit Systemaufrufen) reduziert werden. Der Rechenaufwand ist vergleichbar mit einem System ohne Partitionsgrenzen (und ohne die damit in den Ausführungsbeispielen verbundene Durchsetzung von Sicherheitsanforderungsstufen).

Ferner werden aufgrund des Wegfalls der Systemaufrufe keine zusätzlichen Wrapper-Funktionen hierfür benötigt. Dies bedeutet, dass der Code-Umfang kleiner gehalten werden kann und der Speicherbedarf im Steuergerät nicht unnötig erhöht wird.

Es versteht sich, dass die vorstehende Beschreibung von Ausführungsbeispielen lediglich exemplarischer Natur ist. Der Fachmann kann daher die Ausführungsbeispiele im Rahmen seines Fachwissens ändern, ergänzen und kombinieren. Die Erfindung ist allein durch den Schutzbereich der folgenden Ansprüche definiert.

## Patentansprüche

1. Verfahren zur computergestützten Konfiguration eines Steuergeräts (200) für miteinander kommunizierende Anwendungen (SWC), wobei ein dem Steuergerät zugeordneter Speicher (210) in Partitionen aufgeteilt ist oder wird und wobei einer ersten Partition wenigstens eine Anwendung mit einer ersten Sicherheitsanforderungsstufe zugeordnet ist, einer zweiten Partition wenigstens eine Anwendung mit einer zweiten, von der ersten Sicherheitsanforderungsstufe verschiedenen Sicherheitsanforderungsstufe zugeordnet ist und einer dritten Partition wenigstens eine Anwendung mit einer dritten, von der ersten und zweiten Sicherheitsanforderungsstufe verschiedenen Sicherheitsanforderungsstufe oder mit keiner Sicherheitsanforderungsstufe zugeordnet ist, um fassend die Schritte:
- Analysieren, mittels einer Konfigurationsvorrichtung (100), eines Kommunikationsverhaltens der den unterschiedlichen Partitionen zugeordneten Anwendungen untereinander, um aus der der ersten Partition zugeordneten wenigstens einen Anwendung mit der ersten Sicherheitsanforderungsstufe, der der zweiten Partition zugeordneten wenigstens einen Anwendung mit der zweiten Sicherheitsanforderungsstufe und der der dritten Partition zugeordneten wenigstens einen Anwendung mit der dritten Sicherheitsanforderungsstufe oder mit keiner Sicherheitsanforderungsstufe wenigstens zwei Daten schreibende Anwendungen und eine die geschriebenen Daten lesende Anwendung zu identifizieren, die sich nicht alle in der gleichen Partition befinden;
- Konfigurieren, auf der Grundlage des analysierten Kommunikationsverhaltens, eines gemeinsam benutzten Speicherbereichs im Speicher außerhalb der ersten, zweiten und dritten Partition und Erzeugen einer Kommunikations-Datenstruktur (80) für eine Kommunikation zwischen den Daten schreibenden Anwendungen und der Daten lesenden Anwendung, wobei die Kommunikations-Datenstruktur für die zumindest teilweise Anordnung in dem gemeinsam benutzten Speicherbereich vorgesehen ist, wobei das Analysieren und das Konfigurieren offline vor der Laufzeit der Anwendungen durchgeführt werden und eine Speicherschutzeinheit (230) des Steuergeräts während der Laufzeit der Anwendungen derart konfiguriert wird, dass die schreibenden Anwendungen während ihrer Laufzeit Schreibzugriff und die lesende Anwendung während ihrer Laufzeit nur Lesezugriff, aber keinen Schreibzugriff auf die Kommunikations-Datenstruktur erhalten.

2. Verfahren nach Anspruch 1, wobei der gemeinsam benutzte Speicherbereich in einer vierten Partition konfiguriert wird und/oder wobei der gemeinsam benutzte Speicherbereich als Pufferspeicher oder als Warteschlange konfiguriert wird.

3. Verfahren nach einem der vorhergehenden Ansprüche, ferner umfassend den Schritt des Empfangens von Informationen betreffend die Zuordnung zwischen Partitionen und Anwendungen sowie betreffend das Kommunikationsverhalten der Anwendungen, wobei das Analysieren der Kommunikationswege auf der Grundlage der empfangenen Informationen erfolgt.

4. Verfahren nach einem der vorhergehenden Ansprüche, wobei das Konfigurieren des gemeinsam genutzten Speicherbereichs und das Erzeugen der Kommunikations-Datenstruktur im Zusammenhang mit dem Erstellen von kompilierbaren partitionsspezifischen Konfigurationsdaten erfolgt.

5. Verfahren nach Anspruch 4, ferner umfassend Kompilieren der Konfigurationsdaten und von die Anwendungen enthaltenden Anwendungsdaten, wobei die Anwendungsdaten Aufrufe zu den zu lesenden und zu schreibenden Daten enthalten, und Verlinken der kompilierten Konfigurationsdaten mit den kompilierten Anwendungsdaten, wobei das Verlinken optional auf der Grundlage von Informationen durchgeführt wird, die angeben, welche Anwendungsdaten auf weiche Partitionen abzubilden sind, und/oder ferner umfassend das optionale Laden der verlinkten Daten in das Steuergerät.

6. Verfahren nach einem der vorhergehenden Ansprüche, wobei die Anwendungen konfiguriert sind, gemäß der AUTOSAR-Spezifikation zu kommunizieren.

7. Computerprogrammprodukt mit Programmcodemitteln zur Durchführung des Verfahrens gemäß einem der vorhergehenden Ansprüche, wenn das Computerprogrammprodukt auf einem oder mehreren Prozessoren (110) abläuft, insbesondere gespeichert auf einem Speichermedium.

8. Vorrichtung (100) zur Konfiguration eines Steuergeräts (200) für miteinander kommunizierende Anwendungen (SWC), wobei im Zusammenhang mit einer Konfiguration ein dem Steuergerät zugeordneter Speicher in Partitionen aufgeteilt ist oder wird und wobei einer ersten Partition wenigstens eine Anwendung mit einer ersten Sicherheitsanforderungsstufe zugeordnet ist, einer zweiten Partition wenigstens eine Anwendung mit einer zweiten, von der ersten Sicherheitsanforderungsstufe verschiedenen Sicherheitsanforderungsstufe zugeordnet ist und einer dritten Partition wenigstens eine Anwendung mit einer dritten, von der ersten und zweiten Sicherheitsanforderungsstufe verschiedenen Sicherheitsanforderungsstufe oder mit keiner Sicherheitsanforderungsstufe zugeordnet ist, umfassend:
- eine Analyse-Einrichtung (150), die zum Analysieren eines Kommunikationsverhaltens der den unterschiedlichen Partitionen zugeordneten Anwendungen untereinander und vor der Laufzeit der Anwendungen eingerichtet ist, um aus der der ersten Partition zugeordneten wenigstens einen Anwendung mit der ersten Sicherheitsanforderungsstufe, der der zweiten Partition zugeordneten wenigstens einen Anwendung mit der zweiten Sicherheitsanforderungsstufe und der der dritten Partition zugeordneten wenigstens einen Anwendung mit der dritten Sicherheitsanforderungsstufe oder mit keiner Sicherheitsanforderungsstufe wenigstens zwei Daten schreibende Anwendungen und eine die geschriebenen Daten lesende Anwendung zu identifizieren, die sich nicht alle in der gleichen Partition befinden;
- eine Konfigurations-Einrichtung (160), die zum Konfigurieren, vor der Laufzeit der Anwendungen und auf der Grundlage des analysierten Kommunikationsverhaltens, eines gemeinsam benutzten Speicherbereichs im Speicher außerhalb der ersten, zweiten und dritten Partition und zum Erzeugen einer Kommunikations-Datenstruktur (80) für eine Kommunikation zwischen den Daten schreibenden Anwendungen und der Daten lesenden Anwendung eingerichtet ist; und
- eine Speicherschutzeinheit (230) des Steuergeräts, die dazu ausgebildet ist, während der Laufzeit der Anwendungen derart konfiguriert zu werden, dass die schreibenden Anwendungen während ihrer Laufzeit Schreibzugriff und die lesende Anwendung während ihrer Laufzeit nur Lesezugriff, aber keinen Schreibzugriff auf die Kommunikations-Datenstruktur erhalten,
wobei die Kommunikations-Datenstruktur für die zumindest teilweise Anordnung in dem gemeinsam benutzten Speicherbereich vorgesehen ist.

## Claims

1. Method for the computer-aided configuration of a control unit (200) for intercommunicating applications (SWC), wherein a memory (210) associated with the control unit has been or is divided into partitions and wherein a first partition has at least one associated application with a first safety integrity level, a second partition has at least one associated application with a second safety integrity level, which is different from the first safety integrity level, and a third partition has at least one associated application with a third safety integrity level, which is different from the first and second safety integrity levels, or with no safety integrity level, comprising the steps of:
- analysing, by means of a configuration apparatus (100), a communication behaviour among the applications associated with the different partitions in order to identify, from the at least one application with the first safety integrity level that is associated with the first partition, the at least one application with the second safety integrity level that is associated with the second partition and the at least one application with the third safety integrity level or with no safety integrity level that is associated with the third partition, at least two applications that write data and one application that reads the written data that are not all located in the same partition;
- configuring, on the basis of the analysed communication behaviour, a shared memory area in the memory outside the first, second and third partitions and producing a communication data structure (80) for a communication between the applications that write data and the application that reads data, wherein the communication data structure is intended for at least partial arrangement in the shared memory area, wherein the analysing and the configuring are performed offline before the runtime of the applications, and a memory protection unit (230) of the control unit is configured during the runtime of the applications in such a way that the writing applications, during their runtime, are provided with write access and the reading application, during its runtime, is provided with only read access, but no write access, to the communication data structure.

2. Method according to Claim 1, wherein the shared memory area is configured in a fourth partition and/or wherein the shared memory area is configured as a buffer memory or as a queue.

3. Method according to either of the preceding claims, further comprising the step of receiving information relating to the association between partitions and applications and also relating to the communication behaviour of the applications, wherein the communication paths are analysed on the basis of the received information.

4. Method according to one of the preceding claims, wherein the shared memory area is configured, and the communication data structure is produced, in connection with the creation of compilable partition-specific configuration data.

5. Method according to Claim 4, further comprising compiling the configuration data and application data containing the applications, wherein the application data contain calls to the data to be read and to be written, and linking the compiled configuration data to the compiled application data, wherein the linking is optionally performed on the basis of information that indicates which application data are to be mapped to which partitions, and/or further comprising optionally loading the linked data into the control unit.

6. Method according to one of the preceding claims, wherein the applications are configured to communicate in accordance with the AUTOSAR specification.

7. Computer program product having program code means for performing the method according to one of the preceding claims when the computer program product runs on one or more processors (110), in particular stored on a storage medium.

8. Apparatus (100) for configuring a control unit (200) for intercommunicating applications (SWC), wherein, in connection with a configuration, a memory associated with the control unit has been or is divided into partitions and wherein a first partition has at least one associated application with a first safety integrity level, a second partition has at least one associated application with a second safety integrity level, which is different from the first safety integrity level, and a third partition has at least one associated application with a third safety integrity level, which is different from the first and second safety integrity levels, or with no safety integrity level, comprising:
- an analysis device (150), designed to analyse a communication behaviour among the applications associated with the different partitions, before the runtime of the applications, in order to identify, from the at least one application with the first safety integrity level that is associated with the first partition, the at least one application with the second safety integrity level that is associated with the second partition and the at least one application with the third safety integrity level or with no safety integrity level that is associated with the third partition, at least two applications that write data and one application that reads the written data that are not all located in the same partition;
- a configuration device (160), designed to configure, before the runtime of the applications and on the basis of the analysed communication behaviour, a shared memory area in the memory outside the first, second and third partitions and to produce a communication data structure (80) for a communication between the applications that write data and the application that reads data; and
- a memory protection unit (230) of the control unit, designed to be configured during the runtime of the applications in such a way that the writing applications, during their runtime, are provided with write access and the reading application, during its runtime, is provided with only read access, but no write access, to the communication data structure,
wherein the communication data structure is intended for at least partial arrangement in the shared memory area.

## Revendications

1. Procédé de configuration assistée par ordinateur d'un appareil de commande (200) pour des applications communiquant entre elles (SWC), dans lequel une mémoire (210) associée à l'appareil de commande est ou sera divisée en partitions, et dans lequel au moins une application ayant un premier niveau de sécurité intégrée est associée à une première partition, au moins une application ayant un deuxième niveau de sécurité intégrée, différent du premier niveau de sécurité intégrée, est associée à une deuxième partition, et au moins une application ayant un troisième niveau de sécurité intégrée, différent du premier et du deuxième niveau de sécurité intégrée, ou n'ayant aucun niveau de sécurité intégrée, est associée à une troisième partition, comprenant les étapes consistant à :
- analyser, au moyen d'un dispositif de configuration (100), un comportement de communication entre elles des applications associées aux différentes partitions afin d'identifier parmi ladite au moins une application ayant le premier niveau de sécurité intégrée associée à la première partition, ladite au moins une application ayant le deuxième niveau de sécurité intégrée associée à la deuxième partition, et ladite au moins une application ayant le niveau de sécurité intégrée ou n'ayant aucun niveau de sécurité intégrée associée à la troisième partition, au moins deux applications d'écriture de données et une application de lecture des données écrites qui ne se trouvent pas toutes dans la même partition ;
- configurer, sur la base du comportement de communication analysé, une zone de mémoire partagée dans la mémoire à l'extérieur de la première, de la deuxième et de la troisième partition, et générer une structure de données de communication (80) destinée à une communication entre les applications d'écriture de données et l'application de lecture de données, la structure de données de communication étant prévue pour la disposition au moins partielle dans la zone de mémoire partagée, l'analyse et la configuration étant effectuées hors ligne avant le temps d'exécution des applications, et une unité de protection de mémoire (230) de l'appareil de commande étant configurée pendant le temps d'exécution des applications de telle sorte que les applications d'écriture obtiennent pendant leur temps d'exécution un accès en écriture et l'application de lecture n'obtient pendant son temps d'exécution qu'un accès en lecture mais pas d'accès en écriture à la structure de données de communication.

2. Procédé selon la revendication 1, dans lequel la zone de mémoire partagée est configurée dans une quatrième partition, et/ou dans lequel la zone de mémoire partagée est configurée comme une mémoire tampon ou une file d'attente.

3. Procédé selon l'une quelconque des revendications précédentes, comprenant en outre l'étape consistant à recevoir des informations concernant l'association entre les partitions et les applications ainsi que concernant le comportement de communication des applications, l'analyse des voies de communication étant effectuée sur la base des informations reçues.

4. Procédé selon l'une quelconque des revendications précédentes, dans lequel la configuration de la zone de mémoire partagée et la génération de la structure de données de communication sont effectuées en relation avec la création de données de configuration spécifiques à la partition et pouvant être compilées.

5. Procédé selon la revendication 4, comprenant en outre la compilation des données de configuration et des données d'application contenant les applications, les données d'application contenant des appels des données à lire et à écrire, et la création de liens entre les données de configuration compilées et les données d'application compilées, la création de liens étant en option effectuée sur la base d'informations qui indiquent quelles données d'application sont à représenter sur quelles partitions, et/ou comprenant en outre le chargement en option des données liées sur l'appareil de commande.

6. Procédé selon l'une quelconque des revendications précédentes, dans lequel les applications sont configurées pour communiquer selon la spécification AUTOSAR.

7. Produit de programme informatique comprenant des moyens de code programme permettant d'exécuter le procédé selon l'une quelconque des revendications précédentes lorsque le produit de programme informatique est exécuté sur un ou plusieurs processeurs (110), en particulier en étant stocké sur un support de stockage.

8. Dispositif (100) de configuration d'un appareil de commande (200) pour des applications communiquant entre elles (SWC), dans lequel, en relation avec une configuration, une mémoire associée à l'appareil de commande est ou sera divisée en partitions, et dans lequel au moins une application ayant un premier niveau de sécurité intégrée est associée à une première partition, au moins une application ayant un deuxième niveau de sécurité intégrée, différent du premier niveau de sécurité intégrée, est associée à une deuxième partition, et au moins une application ayant un troisième niveau de sécurité intégrée, différent du premier et du deuxième niveau de sécurité intégrée, ou n'ayant aucun niveau de sécurité intégrée est associée à une troisième partition, comprenant :
- un dispositif d'analyse (150) qui est conçu pour analyser un comportement de communication entre elles des applications associées aux différentes partitions, et est conçu avant le temps d'exécution des applications pour identifier parmi ladite au moins une application ayant le premier niveau de sécurité intégrée associée à la première partition, ladite au moins une application ayant le deuxième niveau de sécurité intégrée associée à la deuxième partition, et ladite au moins une application ayant le niveau de sécurité intégrée ou n'ayant aucun niveau de sécurité intégrée associée à la troisième partition, au moins deux applications d'écriture de données et une application de lecture des données écrites qui ne se trouvent pas toutes dans la même partition ;
- un dispositif de configuration (160) qui est conçu pour configurer avant le temps d'exécution des applications et sur la base du comportement de communication analysé, une zone de mémoire partagée dans la mémoire à l'extérieur de la première, de la deuxième et de la troisième partition, et pour générer une structure de données de communication (80) destinée à une communication entre les applications d'écriture de données et l'application de lecture de données ; et
- une unité de protection de mémoire (230) de l'appareil de commande qui est réalisée pour être configurée pendant le temps d'exécution des applications de telle sorte que les applications d'écriture obtiennent pendant leur temps d'exécution un accès en écriture et l'application de lecture n'obtient pendant son temps d'exécution qu'un accès en lecture mais pas d'accès en écriture à la structure de données de communication, la structure de données de communication étant prévue pour la disposition au moins partielle dans la zone de mémoire partagée.
